# EUROPÄISCHE PATENTSCHRIFT

(11) **EP 1 582 050 B1**
(45) Veröffentlichungstag und Bekanntmachung des Hinweises auf die Patenterteilung: **21.02.2007**
(21) Anmeldenummer: 04804881.3
(22) Anmeldetag: 16.12.2004
(51) Int. Cl.: H04M 1/02

(54) **TRAGBARES ELEKTRISCHES GERÄT MIT AUSWECHSELBAREN GEHÄUSESCHALEN**
PORTABLE ELECTRIC DEVICE WITH INTERCHANGEABLE HOUSING SHELLS
APPAREIL ELECTRIQUE PORTATIF COMPRENANT DES COQUES DE BOITIER INTERCHANGEABLES

(30) Priorität: 09.01.2004 DE 102004001503
(43) Veröffentlichungstag der Anmeldung: 05.10.2005
(73) Patentinhaber: SIEMENS AKTIENGESELLSCHAFT, 80333 München (DE)
(72) Erfinder: HÄNIG, Ulrich, 89134 Blaustein (DE)
(86) Internationale Anmeldenummer: PCT/EP2004/053535
(87) Internationale Veröffentlichungsnummer: WO 2005/067267

(56) Entgegenhaltungen:
- DE-U1- 20 019 958
- DE-U1- 20 111 625
- GB-A- 2 339 993
- US-A1- 2003 087 611

## Beschreibung

Die vorliegende Erfindung betrifft ein tragbares elektrisches Gerät mit auswechselbaren Gehäuseschalen bzw. Gehäuseelementen. Insbesondere betrifft die vorliegende Erfindung ein Mobiltelefon, das eine Individualisierung auf einen bestimmten Benutzer durch Wechseln bzw. Einsetzen benutzerspezifischer Gehäuseschalen oder "Clip-it-Covers" ermöglicht.

Im Stand der Technik sind Mobiltelefone mit wechselbaren Gehäuseschalen bekannt, welche im einfachen Fall eine simple und durch eine geringe Kraft zu lösende Rastverbindung mit einem Grundkörper oder Rumpf des Mobiltelefons aufweisen. Nachteilig an derartigen Rastverbindungen ist, dass diese insbesondere bei einer niedrigen Qualität der Rastverbindungen schnell verschleißen, so dass sich die Gehäuseschalen bei geringer Krafteinwirkung von selbst vom Grundkörper lösen. Abhilfe dafür wird durch komplexere Rastverbindungen geschaffen. Bei diesen meist im Innenraum zwischen einem Grundkörper und einer Gehäuseschale befindlichen Rastverbindungen, welche aufgrund eines Formschlusses zwischen zwei Rasthaken schwer zu lösen sind, wird durch Drücken auf einen von außen zugänglichen Knopf die jeweilige Rastverbindung beispielsweise durch Wegbewegen eines Rasthakens entriegelt wird. Mit einer schiebende oder kippenden Bewegung kann dann die Gehäuseschale vom Grundkörper gelöst werden. Nachteilig hierbei ist, dass durch die Verwendung eines zusätzlichen Elements, wie des Knopfes, welcher zur Entriegelung der Rastverbindung dient, zum Einen ein weiteres verschleißanfälliges Element eingeführt wird, das zum Anderen auch den vorrichtungstechnischen Aufwand eines Mobiltelefons erhöht.

Die Druckschrift DE 201 11 625 U 1 offenbart ein tragbares elektronisches Gerät mit auswechselbaren Gehäuseschalen. Dabei hat das elektronische Gerät eine erste und eine zweite Gehäuseschale, einen Grundkörper mit einem ersten Verbindungsabschnitt zum Verbinden der ersten Gehäuseschale und einem zweiten Verbindungsabschnitt zum Verbinden der zweiten Gehäuseschale. Dabei weist die zweite Gehäuseschale ein Verbindungselement und der zweite Verbindungsabschnitt des Grundkörpers ein korrespondierendes Verbindungselement auf, um eine kraftschlüssige Verbindung zwischen der zweiten Gehäuseschale und dem Grundkörper herzustellen.

Die Druckschrift GB 2339993 A offenbart ein Mobiltelefon mit einer Hauptgehäuseschale und einer Tafel bzw. Abdeckung, die mit der Hauptgehäuseschale beispielsweise mittels einer klammerartigen Struktur in einer lösbaren Verbindung steht. Mittels eines separaten speziellen Werkzeugs kann diese lösbare Verbindung aufgehoben werden und die Abdeckung von der Hauptgehäuseschale entfernt werden, um eine andere Abdeckung beispielsweise mit einer anderen Farbe an der Hauptgehäuseschale anzubringen.

Somit ist es die Aufgabe der vorliegenden Erfindung, eine Möglichkeit zur Individualisierung von tragbaren elektronischen Geräten mit Bezug auf wechselbare Gehäuseschalen zu schaffen, durch die der vorrichtungstechnische Aufwand minimiert wird.

Diese Aufgabe wird durch den unabhängigen Anspruch gelöst. Vorteilhafte Ausgestaltungen sind Gegenstand der Unteransprüche.

Ein tragbares elektronisches Gerät mit wechselbaren Gehäuseschalen oder Gehäuseelementen umfasst dabei eine erste und eine zweite Gehäuseschale. Ferner umfasst das Gerät einen Grundkörper oder Rumpf mit einem ersten Verbindungsabschnitt zum Verbinden der ersten Gehäuseschale und einen zweiten Verbindungsabschnitt zum Verbinden der zweiten Gehäuseschale. Die erste Gehäuseschale weist dabei einen Vorsprung auf, welcher mit dem ersten Verbindungsabschnitt des Grundkörpers in Eingriff bringbar ist. Ferner weist der Grundkörper an seinem zweiten Verbindungsabschnitt ein erstes Verbindungselement auf und weist die zweite Gehäuseschale ein entsprechendes zweites Verbindungselement auf, um durch diese Verbindungselemente ein kraftschlüssige Verbindung herstellen zu können. Außerdem weist die zweite Gehäuseschale an einem dem Grundkörper zugewandten Abschnitt eine Teilausnehmung und weist der Grundkörper an einem der zweiten Gehäuseschale zugewandten Abschnitt eine entsprechende Teilausnehmung auf, so dass die beiden Teilausnehmungen in einem zusammengesetzten Zustand der zweiten Gehäuseschale und des Grundkörpers eine Ausnehmung bilden, in welche der Vorsprung der ersten Gehäuseschale einführbar ist, um durch eine Hebelbewegung die zweite Gehäuseschale von dem Grundkörper zu lösen und die kraftschlüssige Verbindung aufzuheben. Es ist auch denkbar, dass nur entweder die zweite Gehäuseschale oder der Grundkörper eine Teilausnehmung an einem der jeweiligen anderen Komponente zugewandten und angrenzenden Abschnitt aufweist, welche dann alleine die Ausnehmung zur Aufnahme des Vorsprungs der ersten Gehäuseschale bildet. Somit ist es durch diese Konstruktion möglich, dass zusätzliche Komponenten, wie ein oben erwähnter im Stand der Technik verwendeter Knopf weggelassen werden kann, wodurch der vorrichtungstechnische Aufwand minimiert und Kosten gespart werden können. Durch den Wegfall von zusätzlichen Elementen, wie dem Entriegelungsknopf, ist es ferner möglich, die Konstruktion eines Verbindungsabschnitts platzsparender zu gestalten. Außerdem ist vorteilhaft, dass keine Zusatzwerkzeuge, wie Schraubenzieher oder Kugelschreiberspitzen, aber auch Fingernägel, mehr benötigt werden, um die zweite Gehäuseschale vom Grundkörper zu lösen, da das Werkzeug, nämlich der Vorsprung an der ersten Gehäuseschale bereits angebracht ist, und quasi wie ein "Schlüssel" in das durch die Ausnehmung definierte "Schlüsselloch" gesteckt werden kann, um durch eine Hebebewegung, wie beispielsweise eine Rotationsbewegung des Vorsprungs in der Ausnehmung, die zweite Gehäuseschale und den Grundkörper voneinander zu trennen. Überdies hat die Verbindung mittels des zweiten Verbindungsabschnitts und insbesondere die Möglichkeit der Trennung durch Einführen des Vorsprungs der ersten Gehäuseschale in die Ausnehmung den Vorteil, dass hierdurch kein Einfluss auf Abstrahleigenschaften der Antenne oder SAR(Spezifische Absorptionsrate) -Werte genommen wird, sofern es sich bei dem tragbaren elektronischen Gerät um ein Mobilfunkgerät, wie beispielsweise ein Mobiltelefon handelt.

Gemäß einer vorteilhaften Ausgestaltung ist der Vorsprung der ersten Gehäuseschale als eine Rastnase ausgebildet, welche mit einem korrespondierenden Rastelement des ersten Verbindungsabschnitts des Grundkörpers eine erste Rastverbindung bildet. Bei dieser Ausgestaltung ist vorteilhaft, dass der Vorsprung an der ersten Gehäuseschale somit zwei Funktionen gleichzeitig erfüllt, nämlich zum Einen eine mechanische Verbindung zum ersten Verbindungsabschnitt des Grundkörpers herzustellen, und gleichzeitig als Schlüssel bzw. Entriegelungselement zum Lösen der zweiten Gehäuseschale zu dienen. Auf diese Weise kann der vorrichtungstechnische Aufwand bei der Herstellung der ersten Gehäuseschale weiter verringert werden.

Es ist ferner möglich, dass der Vorsprung der ersten Gehäuseschale in Form einer Zunge ausgebildet ist und folglich im Querschnitt eine größere Breitenabmessung als eine Höhenabmessung aufweist. Entsprechend kann die von der zweiten Gehäuseschale und dem Grundkörper gebildete Ausnehmung einen länglichen bzw. flachen Verlauf aufweisen, so dass keine unerwünschten Gegenstände in die Ausnehmung eindringen können. Um jedoch ein leichtes Einführen des Vorsprungs zu ermögLichen, ist es vorteilhaft, die Ausnehmung etwas größer als den Querschnitt des Vorsprungs auszubilden.

Gemäß einer weiteren vorteilhaften Ausgestaltung umfasst die zwischen der zweiten Gehäuseschale und dem Grundkörper bestehende kraftschlüssige Verbindung eine zweite Rastverbindung, bei der die zweite Gehäuseschale und der Grundkörper jeweilige Rastelemente aufweisen. Derartige Rastelemente können darin bestehen, dass sowohl die zweite Gehäuseschale als auch der Grundkörper einen jeweiligen Rasthaken aufweisen, wobei die beiden Rasthaken im zusammengesetzten Zustand sowohl eine kraftschlüssige als auch eine formschlüssige Verbindung darstellen, wobei zumindest einer der Rasthaken flexibel ausgebildet ist, um bei einer Hebelbewegung des Vorsprungs der ersten Gehäuseschale in der Ausnehmung von dem zweiten Rasthaken gelöst zu werden. Es ist auch möglich, dass entweder die zweite Gehäuseschale oder der Grundkörper einen Rasthaken aufweist und die jeweilige andere Komponente eine Rastöffnung, in die der Rasthaken oder ein Abschnitt von diesem geführt werden, um eine kraftschlüssige oder auch formschlüssige Verbindung herzustellen. Neben der Möglichkeit, dass die kraftschlüssige Verbindung eine zweite Rastverbindung darstellt, ist es auch möglich, an dem Grundkörper und der zweiten Gehäuseschale Verbindungselemente vorzusehen, welche einen hohen Reibungskoeffizienten aufweisen, um somit eine effektive Reibverbindung zwischen zweiter Gehäuseschale und Grundkörper herzustellen. Beispielsweise ist es möglich, jeweilige Verbindungselemente mit einer Gummischicht zu versehen, so dass eine Reibung zwischen den beiden Gummischichten im zusammengesetzten Zustand die zweite Gehäuseschale und den Grundkörper zusammenhält.

Bevorzugte Ausführungsformen der vorliegenden Erfindung werden nachfolgend Bezug nehmen auf die beiliegenden Zeichnungen näher erläutert. Es zeigen:
- Figur 1: eine Ansicht von hinten eines tragbaren elektronischen Geräts in der Form eines Mobiltelefons, bei dem eine erste Gehäuseschale (z.B. ein Akkudeckel) im geschlossenen Zustand an einem Grundkörper des Mobiltelefons angebracht ist;
- Figur 2: eine Ansicht von hinten eines Mobiltelefons entsprechend Figur 1, bei dem jedoch die erste Gehäuseschale schon teilweise von dem Grundkörper entfernt worden ist;
- Figur 3: eine Querschnittsansicht von der Seite auf das in Figur 1 und 2 gezeigte Mobiltelefon, wobei die erste Gehäuseschale abgenommen ist und in einen Entriegelungsabschnitt des Mobiltelefons eingeführt werden soll;
- Figur 4: eine Ansicht von oben auf das Mobiltelefon, wobei ein Vorsprung bzw. eine Rastnase der ersten Gehäuseschale in eine Ausnehmung des Entriegelungsabschnitts am Mobiltelefon eingeführt ist;
- Figur 5: eine Seitenansicht auf das in Figur 4 gezeigte Mobiltelefon, wobei die in die Ausnehmung des Entriegelungsabschnitts des Mobiltelefons eingeführte Rastnase der ersten Gehäuseschale in der Ausnehmung um 90° gedreht worden ist, wodurch die zweite Gehäuseschale von dem Grundkörper abgehoben wird;
- Figuren 6: schematische Querschnittsdarstellungen, bei denen die Rastnase der ersten Gehäuseschale in der durch die zweite Gehäuseschale und den Grundkörper gebildete Ausnehmung eingeführt ist, um durch Drehung der Rastnase die zweite Gehäuseschale und den Grundkörper voneinander zu lösen;
- Figur 7: eine Querschnittsansicht von der Seite auf das in Figur 5 gezeigte Mobiltelefon, bei dem die Drehung der Rastnase die zweite Gehäuseschale vom Grundkörper gelöst hat.

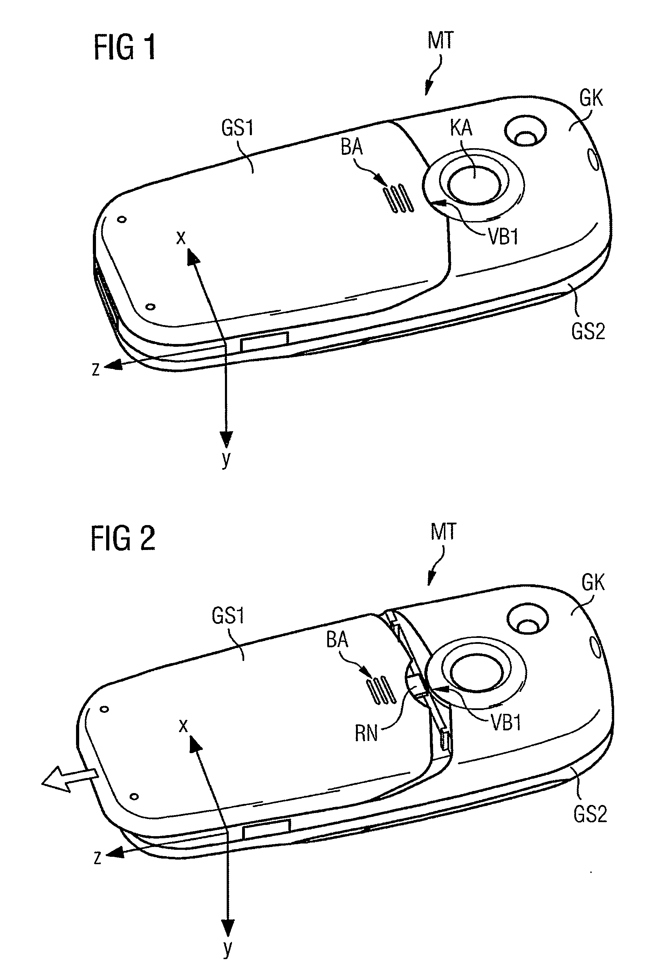

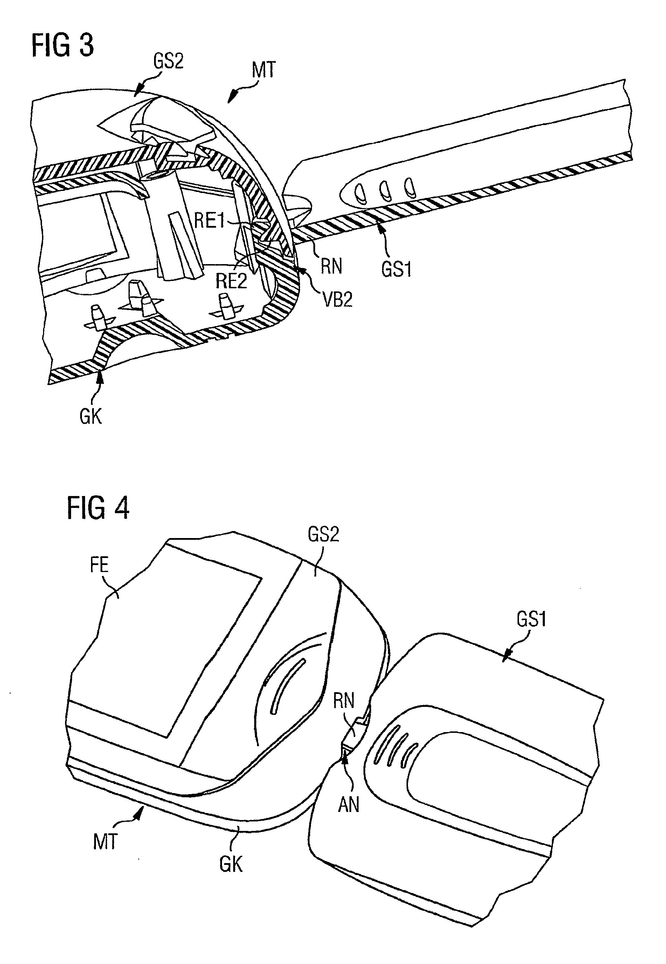

Es sei nun auf Figur 1 verwiesen, in der ein Mobiltelefon MT bzw. dessen Gehäusekonstruktion in einer Ansicht von hinten gezeigt ist. Auf der hinteren Seite befindet sich eine erste Gehäuseschale bzw. ein erstes Gehäuseelement (beispielsweise ein Akkudeckel), das mit einem Grundkörper GK bzw. einem Rumpf GK verbunden ist. Ferner ist eine Öffnung KA zu sehen, in welcher im vollständig zusammengebauten Zustand ein Karneraelement einschließlich Optik angeordnet ist. Auf der Vorderseite des Mobiltelefons MT bzw. des Grundkörpers GK ist eine zweite Gehäuseschale GS2 angeordnet, welche ein Fenster FE für eine Anzeige aufweist und in den Figuren 3 bis 7 besser zu sehen sein wird. Figur 1, zeigt nun den Zustand, bei dem die erste Gehäuseschale GS1 in einem zusammengesetzten Zustand am Grundkörper GK angeordnet ist. Zur Beschreibung von Bewegungen der Gehäuseschalen in den folgenden Figuren sei die Z-Achse bzw. die Z-Richtung als die Längsrichtung des im Wesentlichen in der Form eines länglichen Parallelepipeds ausgebildeten Mobiltelefons definiert. Die X-Richtung bezeichnet die Breite des Mobiltelefons MT und die Y-Richtung bezeichnet die Höhe des Mobiltelefons. Es sei nun auf Figur 2 verwiesen, bei der die erste Gehäuseschale GS1 ein Stück in Z-Richtung, d. h. in der Bildebene nach links unten verschoben worden ist. Es wird dabei davon ausgegangen, dass die Gehäuseschale GS1 in diesem Beispiel entlang des Grundkörpers GK auf im Grundkörper GK vorgesehenen Schienenelementen in Z-Richtung verschiebbar ist. Dies ist jedoch nur eine vorteilhafte Ausgestaltung und für die Erfindung nicht wesentlich.

Die erste Gehäuseschale GS1 weist einen Vorsprung RN auf, welcher gleichzeitig die Funktion einer Rastnase RN hat. Diese Rastnase ist derart ausgestaltet, dass sie mit einem entsprechenden Rastelement eines am Grundkörper vorgesehenen Verbindungsabschnitts VB1 in eine (erste) Rastverbindung bringbar ist. Die Rastnase ist dabei zungenförmig ausgebildet, d. h. sie hat eine größere Abmessung in Breitenrichtung bzw. X-Richtung als eine Abmessung in Höhenrichten bzw. Y-Richtung.

An der ersten Gehäuseschale GS1 ist ferner ein Betätigungsabschnitt BA angeordnet, der kleine Erhöhungen bzw. ein Profil aufweist, so dass durch Anordnung eines Fingers eines Benutzers auf diesem Betätigungsabschnitt die erste Gehäuseschale GS1 von dem Benutzer in Z-Richtung verschoben werden kann, und somit auch ein Lösen der Rastnase RN von einem entsprechenden Verbindungselement des ersten Verbindungsabschnitts VB1 durch Verschieben der ersten Gehäuseschale GS1 in der Bildebene nach links unten (in Z-Richtung) möglich ist. Dieses Lösen der ersten Gehäuseschale GS1 von dem Grundkörper GK stellt einen ersten Schritt zum Lösen der auswechselbaren Gehäuseschalen GS1 und GS2 vom Grundkörper dar.

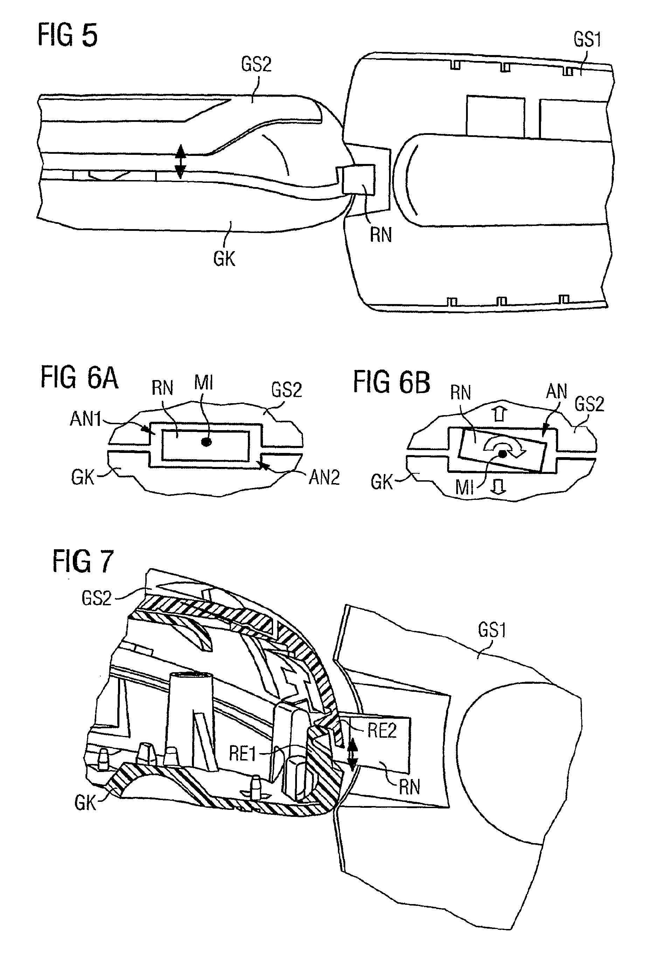

Diese gelöste Gehäuseschale GS1, genauer gesagt deren Rastnase RN wird nun benötigt, um auch die zweite Gehäuseschale vom Grundkörper GK zu entfernen. Wie es in Figur 3 gezeigt ist, ist die zweite Gehäuseschale GS2 mit dem Grundkörper ebenso über eine Rastverbindung bzw. eine zweite Rastverbindung verbunden. Dabei weist ein zweiter Verbindungsabschnitt VB2 des Grundkörpers GK einen ersten Rasthaken RE1 auf, der mit einem zweiten Rasthaken RE2 der zweiten Gehäuseschale GS2 in Eingriff steht. Hierdurch wird eine kraftschlüssige und formschlüssige Verbindung zwischen der zweiten Gehäuseschale GS2 und dem Grundkörper GK geschaffen, die ein Lösen dieser Komponenten aus dem zusammengesetzten Zustand verhindert. Um nun diese zweite Rastverbindung zu lösen, befindet sich mit Bezug auf das gesamte Mobiltelefon MT auf dessen Vorderseite ein Entriegelungsabschnitt, der eine Ausnehmung AN aufweist, welche von zwei Teilausnehmungen jeweils an der zweiten Gehäuseschale GS2 und dem Grundkörper GK gebildet wird. Diese Ausnehmung AN ist besser in den Figuren 4 und 6 zu sehen.

Wie es nun in Figur 4 gezeigt ist, wird die Rastnase RN der ersten Gehäuseschale GS1 in die Ausnehmung AN eingeführt. In Figur 6A ist dazu eine schematische Querschnittsansicht gezeigt, welche am vorderen Abschnitt der Ausnehmung AN genommen wurde. Dabei ist zu sehen, dass die Ausnehmung AN (vergleiche dazu auch Figur 6B) von zwei Teilausnehmungen AN1 an der zweiten Gehäuseschale GS2 und AN2 am Grundkörper GK gebildet wird. Die Ausnehmung AN ist dabei so bemessen, dass die Rastnase RN quasi als Schlüssel in dieses durch die Ausnehmung AN gebildete Schlüsselloch passt. Um ein leichtes Einführen der Rastnase RN in die Ausnehmung zu ermöglichen, kann diese in ihren Ausmessungen etwas größer sein als der Querschnitt der Rastnase RN, wie es in Figur 6A und Figur 6B gezeigt ist.

Befindet sich nun die Rastnase RN in der Ausnehmung AN, so kann die Rastnase RN, wie es in Figur 6B gezeigt ist, um ihre Mittelachse MI beispielsweise in Uhrzeigerrichtung gedreht werden. Dadurch treten die Kanten der Rastnase mit den Innenflächen der Teilausnehmungen AN1 und AN2 in Kontakt, wobei durch die Hebelwirkung der an den beiden Teilausnehmungen anliegenden Kanten der Rastnase die zweite Gehäuseschale GS2 und der Grundkörper GK auseinandergedrückt werden, wie es auch in Figur 5 zu sehen ist.

Anstatt die Rastnase RN in der Ausnehmung AN in der X-Y-Ebene zu drehen, um die zweite Gehäuseschale GS2 und den Grundkörper GK voneinander zu trennen bzw. deren Rasthaken RE1 und RE2 zu trennen, ist es auch möglich, die Rastnase RN bzw. die erste Gehäuseschale GS1 um eine Achse parallel zur X-Achse zu verkippen. Ausgehend von Figur 3 würde das bedeutet, dass die erste Gehäuseschale GS1 längs zum Mobiltelefon MT ausgerichtet bleibt, jedoch der im Bild gezeigte rechte Abschnitt der Gehäuseschale GS1 in Richtung nach unten und links verschwenkt wird. Dabei kommt dann die Rastnase mit dem vorderen Abschnitt der Teilausnehmung AN2 des Grundkörpers GK in Anlage und bildet eine Verschwenkachse oder Hebelachse, so dass ein vorderer Abschnitt der Rastnase auf die Teilausnehmung AN1 der zweiten Gehäuseschale GS2 drückt und die zweite Gehäuseschale GS2 und den Grundkörper GK voneinander trennt.

Es sei nun auf Figur 7 verwiesen, in der ein entriegelter Zustand gezeigt ist, bei dem durch Rotation der Rastnase RN gemäß Figur 6B die beiden Rasthaken RE1 und RE2 außer Eingriff gebracht worden sind, so dass die beiden Gehäuseelemente GK und GS2 getrennt werden können. Es sei bemerkt, dass bei einer Entriegelung gemäß der Figur 6B oder bei einem Verschwenken der Rastnase bzw. der ersten Gehäuseschale GS1 um eine zur X-Achse parallelen Achse, zumindest einer der Rasthaken RE1 oder RE2 derart flexibel ausgebildet sein muss, damit er bezüglich des jeweilig anderen Rasthakens außer Eingriff gebracht werden kann. Vorteilhafter Weise sind dabei die zweite Gehäuseschale GS2 und zumindest der Grundkörper GK im Verbindungsabschnitt VB2 aus Kunststoff ausgebildet. Auch die erste Gehäuseschale GS1 kann aus Kunststoff hergestellt sein.

## Patentansprüche

1. Tragbares elektronisches Gerät mit auswechselbaren Gehäuseschalen, umfassend folgende Merkmale:
- eine erste (GS1) und eine zweite (GS2) Gehäuseschale;
- einen Grundkörper (GK) mit einem ersten Verbindungsabschnitt (VB1) zum Verbinden der ersten Gehäuseschale, und einem zweiten Verbindungsabschnitt (VB2) zum Verbinden der zweiten Gehäuseschale;
wobei die zweite Gehäuseschale ein Verbindungselement (RE2) und der zweite Verbindungsabschnitt des Grundkörpers ein korrespondierendes Verbindungselement (RE1) aufweist, um eine kraftschlüssige Verbindung zwischen der zweiten Gehäuseschale und dem Grundkörper herzustellen,
**dadurch gekennzeichnet,**
**dass** die erste Gehäuseschale einen Vorsprung (RN) aufweist; und
**dass** die zweite Gehäuseschale und der Grundkörper derart ausgestaltet sind, dass sie in einem zusammengesetzten Zustand an einem aneinander angrenzenden Abschnitt eine Ausnehmung bilden, in welche der Vorsprung der ersten Gehäuseschale einführbar ist, um durch eine Hebelbewegung die zweite Gehäuseschale und den Grundkörper voneinander zu lösen und die kraftschlüssige Verbindung aufzuheben.

2. Gerät nach Anspruch 1,
bei dem die zweite Gehäuseschale an einem dem Grundkörper zugewandten Abschnitt eine erste Teilausnehmung (AN1) und der Grundkörper an einem der zweiten Gehäuseschale zugewandten Abschnitt eine entsprechende zweite Teilausnehmung (AN2) aufweist, so dass die beiden Teilausnehmungen in dem zusammengesetzten Zustand die Ausnehmung (AN) bilden.

3. Gerät nach Anspruch 1 oder 2,
bei dem der Vorsprung (RN) der ersten Gehäuseschale (GS1) als eine Rastnase ausgebildet ist, welche mit einem korrespondieren Rastelement in dem ersten Verbindungsabschnitt (VB1) eine erste Rastverbindung bildet.

4. Gerät nach einem der Ansprüche 1 bis 3,
bei dem der Vorsprung (RN) zungenförmig ausgebildet ist und im Querschnitt ein größere Breitenabmessung als Höhenabmessung aufweist.

5. Gerät nach einem der Ansprüche 1 bis 4,
bei dem die kraftschlüssige Verbindung eine zweite Rastverbindung umfasst, bei der die zweite Gehäuseschale (GS2) und der Grundkörper (GK) ein jeweiliges Rastelement (RE1, RE2) aufweisen.

6. Gerät nach einem der Ansprüche 1 bis 5,
das als ein Mobilfunkgerät, Mobiltelefon oder als ein tragbarer Computer ausgebildet ist.

## Claims

1. Portable electronic device with interchangeable housing shells, comprising the following features;
- a first (GS1) and a second (GS2) housing shell;
- a basic body (GK) with a first connecting segment (VB1) for connecting the first housing shell, and a second connecting segment (VB2) for connecting the second housing shell;
with the second housing shell having a connecting element (RE2) and the second connecting segment of the basic body having a corresponding connecting element (RE1) in order to establish a force-fit connection between the second housing shell and the basic body,
**characterised in that**
the first housing shell has a projection (RN), and that the second housing shell and the basic body are designed such that, in an assembled state, they form a recess at an adjoining segment, into which the projection of the first housing shell can be inserted in order to detach the second housing shell and the basic body from one another by means of a lever movement and to release the force-fit connection.

2. Device according to claim 1,
in which the second housing shell has a first sub-recess (AN1) on a segment facing the basic body and the basic body has a corresponding second sub-recess (AN2) facing the second housing shell, so that the two sub-recesses in the assembled state form the recess (AN).

3. Device according to claim 1 or 2,
in which the projection (RN) of the first housing shell (GS1) is designed as a latch, which, together with a corresponding latch element in the first connecting segment (VB1) forms a first snap-on connection.

4. Device according to one of claims 1 to 3,
in which the projection (RN) is designed in the shape of a tongue and has a larger latitudinal dimension than height dimension in cross-sectional terms.

5. Device according to one of claims 1 to 4,
in which the force-fit connection comprises a second snap-on connection, in which the second housing shell (GS2) and the basic body (GK) comprise a respective snap-on element (RE1, RE2).

6. Device according to one of claims 1 to 5,
which is designed as a mobile radio device, mobile telephone or as a portable computer.

## Revendications

1. Appareil électronique portable avec des coques de boîtier interchangeables, présentant les caractéristiques suivantes :
- une première coque de boîtier (GS1) et une seconde coque de boîtier (GS2) ;
- un corps de base (GK) avec une première partie de liaison (VB1) pour la liaison de la première coque de boîtier, et une seconde partie de liaison (VB2) pour la liaison de la seconde coque de boîtier ;
la seconde coque de boîtier présentant un élément de liaison (RE2) et la seconde partie de liaison du corps de base présentant un élément de liaison (RE1) correspondant, afin d'établir une liaison par adhérence entre la seconde coque de boîtier et le corps de base,
**caractérisé en ce que**
la première coque de boîtier présente une partie saillante (RN) et
**en ce que** la seconde coque de boîtier et le corps de base sont conçus de telle sorte que, lorsqu'ils sont assemblés, ils forment sur une partie contiguë un évidement dans lequel la partie saillante de la première coque de boîtier peut être introduite, afin de détacher par un mouvement de levier la seconde coque de boîtier et le corps de base et de supprimer la liaison par adhérence.

2. Appareil selon la revendication 1,
dans lequel la seconde coque de boîtier présente sur une partie tournée vers le corps de base un premier évidement partiel (AN1) et le corps de base sur une partie tournée vers la seconde coque de boîtier un second évidement partiel (AN2) correspondant, de sorte que les deux évidements partiels forment l'évidement (AN) dans l'état assemblé.

3. Appareil selon la revendication 1 ou 2,
dans lequel la partie saillante (RN) de la première coque de boîtier (GS1) est conçue comme un nez d'encliquetage qui forme avec un élément d'encliquetage correspondant une première liaison par encliquetage dans la première partie de liaison (VB1).

4. Appareil selon l'une quelconque des revendications 1 à 3,
dans lequel la partie saillante (RN) est conçue en forme de languette et présente en section une dimension de largeur plus grande que la dimension de hauteur.

5. Appareil selon l'une quelconque des revendications 1 à 4,
dans lequel la liaison par adhérence comprend une seconde liaison par encliquetage, dans laquelle la seconde coque de boîtier (GS2) et le corps de base (GK) présentent un élément d'encliquetage (RE1, RE2) respectif.

6. Appareil selon l'une quelconque des revendications 1 à 5,
qui est conçu comme un appareil de téléphonie mobile, un téléphone mobile ou comme un ordinateur portable.
